# EUROPEAN PATENT APPLICATION

(11) **EP 2 194 561 A2**
(43) Date of publication of application: **09.06.2010**
(21) Application number: 09176920.8
(22) Date of filing: 24.11.2009
(51) Int. Cl.: H01J 1/70, H01J 29/28, H01J 61/38, H01J 9/20, H01J 61/30, H01J 63/06, H01J 17/49, H01J 31/12

(54) **Light emission device and display device using same as light source**

(30) Priority: 08.12.2008 KR 20080124092
(71) Applicant: Samsung SDI Co., Ltd., Gyeonggi-do (KR)
(72) Inventor: KIM, Yoon-Jin, Gyeonggi-do (KR); KIM, Jae-Myung, Gyeonggi-do (KR); JOO, Kyu-Nam, Gyeonggi-do (KR); LEE, Sang-Jin, Gyeonggi-do (KR); LEE, So-Ra, Gyeonggi-do (KR); LEE, Jong-Hee, Gyeonggi-do (KR); JEONG, Jae-Sun, 1005, Lausanne (CH)
(74) Representative: Walaski, Jan Filip

(57) **Abstract**

A light emission device including a first substrate and a second substrate facing each other with a vacuum region therebetween; an electron emission region at a surface of the first substrate facing the second substrate; a phosphor layer for receiving the electrons emitted from the electron emission region; and a reflective layer covering the phosphor layer, wherein the reflective layer comprises a first reflective layer comprising Al and a second reflective layer comprising Ag.

## Description

The present invention relates to a light emission device and a display device using the same as a light source. More particularly, the present invention relates to a light emission device having a high cathodoluminescence luminous efficiency and a display device using the same as a light source.

A device, which can emit light out of the device, can be referred to as a light emission device. A light emission device may have a front substrate on which a phosphor layer and an anode electrode are formed and a rear substrate on which electron emission regions and driving electrodes are formed. The peripheries of the front and rear substrates are bonded together by a sealing member to form a sealed interior space, and then the interior space is exhausted, thereby forming a vacuum vessel.

Typically, driving electrodes of the light emission device include cathode electrodes and gate electrodes. In one embodiment, the gate electrodes are located on the cathode electrodes and are formed in a direction crossing the cathode electrodes. Electron emission regions are formed at the crossing regions of the cathode electrodes and the gate electrodes.

In another embodiment, the driving electrodes can have a comb pattern and include cathode and gate electrodes that are alternatively arranged. Here, the electron emission region is disposed on the side of the corresponding cathode electrodes facing the corresponding gate electrode.

The light emission device has a plurality of pixels by associating the cathode electrodes with the gate electrodes. Set (or predetermined) driving voltages are applied to the cathode electrodes and the gate electrodes to control the amount of output (or emission) current (or electrons) of the electron emission regions per pixel. As such, the light emission device controls the luminance of the phosphor layer per pixel. Here, the light emission device can be used as a light source in a display device having a non-self-emissive display panel such as a liquid crystal display panel.

A metal reflective layer may be disposed on one surface of the phosphor layer formed on the front substrate. The metal reflective layer reflects the visible light emitted to the rear substrate from among the visible light emitted from the phosphor layer toward the front substrate side to increase the luminance of the light emitting surface. The metal reflective layer can also be referred to as a metal back layer. In order to further improve the cathode luminescence (CL) efficiency of the phosphor layer, there is a need to improve the reflective efficiency of the metal reflective layer.

Aspects of the present invention are directed toward a light emission device and a display device using the same as a light source having a high cathode luminescence efficiency.

Other aspects of the present invention are directed toward a light emission device capable of improving the cathode luminescence efficiency of the phosphor layer by improving reflectivity of a reflective layer, and a display device using the light emission device as a light source.

The aspects of the present invention are not limited to the above described aspects.

According to an embodiment of the present invention, a light emission device is provided to include: a first substrate and a second substrate facing each other with a vacuum region therebetween; an electron emission region at a surface of the first substrate facing the second substrate; a driving electrode at the surface of the first substrate and for controlling an amount of electrons emitted from the electron emission region; an anode at a surface of the second substrate facing the first substrate; a phosphor layer on one surface of the anode and for receiving at least a portion of the electrons emitted from the electron emission region; and a reflective layer covering the phosphor layer, wherein the reflective layer includes a first reflective layer including Al and a second reflective layer including Ag.

The reflective layer is provided by covering the phosphor layer with the first reflective layer and covering the first reflective layer with the second reflective layer, or by covering the phosphor layer with the second reflective layer and covering the second reflective layer with the first reflective layer.

According to another embodiment of the present invention, provided is a display device including the light emission device and a display panel disposed to receive light emitted from the light emission device.

Other specific characteristics of exemplary embodiments of the present invention are described in the following detailed description.

Here, the light emission device according to an embodiment of the present invention improves the reflectivity of the reflective layer, so as to provide a phosphor with an improved cathode luminescence efficiency.

The accompanying drawings, together with the specification, illustrate exemplary embodiments of the present invention, and, together with the description, serve to explain the principles of the present invention.
FIG. 1 is a partial cross-sectional view showing a light emission device according to an embodiment of the present invention.
FIG. 2 is an exploded perspective schematic view showing the inside of an effective region of the light emission device shown in FIG. 1.
FIG. 3 is a partial cross-sectional view showing a light emission device according to another embodiment of the present invention.
FIG. 4 is an exploded perspective schematic view showing a display device according to yet another embodiment of the present invention.
FIG. 5 is a partial cross-sectional view showing the display device shown in FIG. 4.
FIG. 6 is a graph showing reflectivity of reflective layers obtained from Example 1 and Comparative Examples 2 to 4.

In the following detailed description, only certain exemplary embodiments of the present invention are shown and described, by way of illustration. As those skilled in the art would recognize, the invention may be embodied in many different forms and should not be construed as being limited to the embodiments set forth herein. Also, in the context of the present application, when an element is referred to as being "on" another element, it can be directly on the another element or be indirectly on the another element with one or more intervening elements interposed therebetween. Like reference numerals designate like elements throughout the specification.

Exemplary embodiments of the present invention will hereinafter be described in more detail. However, these embodiments are only exemplary, and the present invention is not limited thereto.

According to a first embodiment of the present invention, provided is a light emission device including: a first substrate and a second substrate arranged to face each other with a vacuum region therebetween; an electron emission region disposed at a surface of the first substrate facing the second substrate (hereafter also referred to as the inside surface of the first substrate); a driving electrode disposed at the inside surface of the first substrate and for controlling the amount of electrons emitted by the electron emission region; an anode electrode disposed at a surface of the second substrate facing the first substrate (hereafter also referred to as the inside surface of the second substrate); a phosphor layer formed on one surface of the anode electrode to receive at least a portion of the electrons emitted from the electron emission region; and a reflective layer covering the phosphor layer. The reflective layer includes a first reflective layer including Al and a second reflective layer including Ag.

According to one embodiment, the reflective layer is formed by covering the phosphor layer with the first reflective layer and covering the first reflective layer with the second reflective layer, or by covering the phosphor layer with the second reflective layer and covering the second reflective layer with the first reflective layer. In other words, the light emission device includes the anode electrode, the phosphor layer on the anode electrode, the first reflective layer on the phosphor layer, and the second reflective layer on the first reflective layer in order, or includes the anode electrode, the phosphor layer on the anode electrode, the second reflective layer on the phosphor layer, and the first reflective layer on the second reflective layer in order.

In addition, the light emission device may include a reflective space between the phosphor layer and the reflective layer. The reflective space may be formed by providing an intermediate film on the phosphor layer during the manufacturing process and removing the intermediate film during the baking process. That is, a composition including an organic solvent and a resin capable of being removed during the baking process is coated on the phosphor layer to provide an intermediate film, and then a reflective layer is formed on the intermediate film. During the following baking process, the resin and the organic solvent are removed to provide the reflective space. When a process for forming the intermediate film is performed, it is possible to improve the adhesive strength of the reflective layer, to decrease the roughness of the phosphor layer, and to increase the smoothness, and thereby the reflectivity is improved. The resin may be prepared by mixing at least one of ethylcellulose, nitrocellulose, an acryl-based resin, and the like, and the organic solvent may be prepared by mixing texanol, terpineol, butyl carbitol, and/or the like.

The first reflective layer may be formed by any suitable process for forming an Al reflective layer, and representative examples thereof may include Al thermal evaporation, Al lamination, Al lacquering, Al sputtering, and/or the like.

According to an embodiment of the present invention, the first reflective layer has a thickness between 20 and 300nm (200 and 3000Å). In one embodiment, when the first reflective layer has a thickness of less than 20nm (200Å), the reflectivity is deteriorated. In another embodiment, when the first reflective has a thickness that is more than 300nm (3000Å), the transmission efficiency of electrons is deteriorated.

In one embodiment, the second reflective layer is formed by spray-coating a metal composition including an Ag salt, an additive, and a solvent on one surface of the phosphor layer or one surface of the first reflective layer and drying the same. According to one embodiment, the Ag salt is selected from the group consisting of Ag-nitrates, Ag-chlorides, Ag-acetates, and combinations thereof.

In addition, the additive may be prepared by mixing at least one of a dispersing agent or a reducing agent. The dispersing agent may be a quadribasic acid such as ethylenediamine tetraacetic acid, and the reducing agent may be selected from the group consisting of NaBH₄, hydrazine, ethylamine, and combinations thereof.

According to one embodiment, the additive selected from the group consisting of a dispersing agent, a reducing agent, and combinations thereof and a metal are mixed at a weight ratio of 0.25:1 to 2:1. In one embodiment, when the additive includes both the dispersing agent and the reducing agent, a metal, a dispersing agent, and a reducing agent are mixed at a weight ratio of 1:0.25:0.5 to 1:1:1.

The solvent may be selected from the group consisting of H₂O, Na₄OH, NaOH, and combinations thereof.

In the composition, the metal salt between 5 and 20wt% may be used, and the additive between 5 and 20wt% may be used. When the dispersing agent and the reducing agent are used together as an additive, the mixing ratio may be suitably adjusted.

The drying process may be performed at a temperature between 100 and 450°C. In one embodiment, the drying process is performed at a temperature between 400 and 450°C to reduce (or prevent) the generation of a remaining gas during the vacuum sealing process.

The Ag ion in the Ag salt is reduced to Ag during the drying process and provides a second reflective layer, so the second reflective layer has Ag in a nano-size to provide a dense and uniform thickness. In addition, the dispersing agent, the reducing agent, and the like that are used as an additive are removed during the following baking process, so they are not present in the final light emission device.

According to one embodiment, the second reflective layer has a thickness between 20nm and 300nm (200 and 3000Å). In one embodiment, when the second reflective layer has a thickness that is less than 20nm (200Å), the reflective efficiency is deteriorated. In another embodiment, when the second reflective layer has a thickness that is more than 300nm (3000Å), the electron transmission efficiency is deteriorated.

The reflective layer of the light emission device includes fine holes for transmitting an electron beam and reflects the visible light emitted toward the first substrate from the phosphor layer, to the second substrate side, so as to improve the luminance of the light emitting surface.

The phosphor layer may be formed with a white phosphor, which is a mixture of red phosphor, green phosphor, and blue phosphor. The red phosphor is selected from the group consisting of Y₂O₃:Eu, Y₂O₂S:Eu, SrTiO₃:Pr, and combinations thereof, and the green phosphor is selected from the group consisting of Y₂SiO₅:Tb, Gd₂O₂S:Tb, ZnS:(Cu,Al), ZnSiO₄:Mn, Zn(Ga,Al)₂O₄:Mn, SrGa₂S₄:Eu, and combinations thereof. In addition, the blue phosphor is selected from the group consisting of ZnS:(Ag,Al), Y₂SiO₅:Ce, BaMgAl₁₀O₁₇:Eu, and combinations thereof. According to one embodiment, in the phosphor layer, the red phosphor, the green phosphor, and the blue phosphor are mixed in a weight ratio of 15:30:24 to 30:60:45. In one embodiment, when the mixing ratio of red phosphor, green phosphor, and blue phosphor is within the above described range, and it is applied to the light emission device and the light emission device is used for a light source of a display device to provide white light, the light generated from the light-emission device can have an improved luminance and suitable color coordinates for transmitting by the display panel.

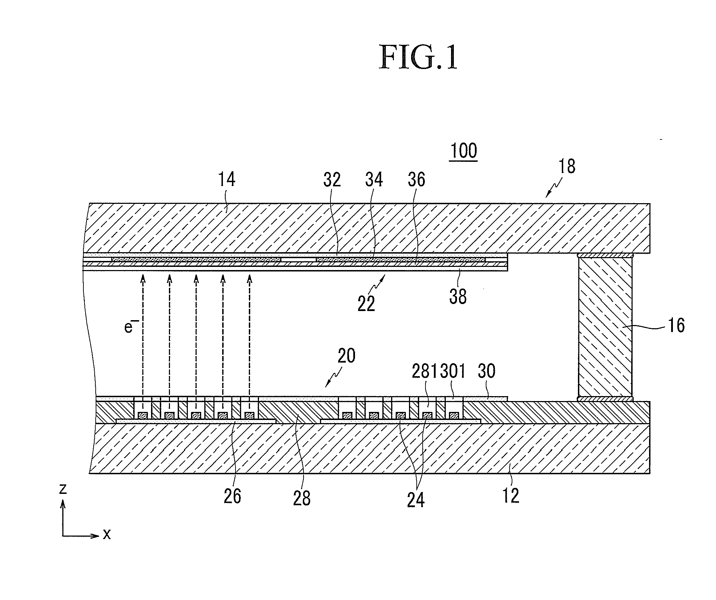

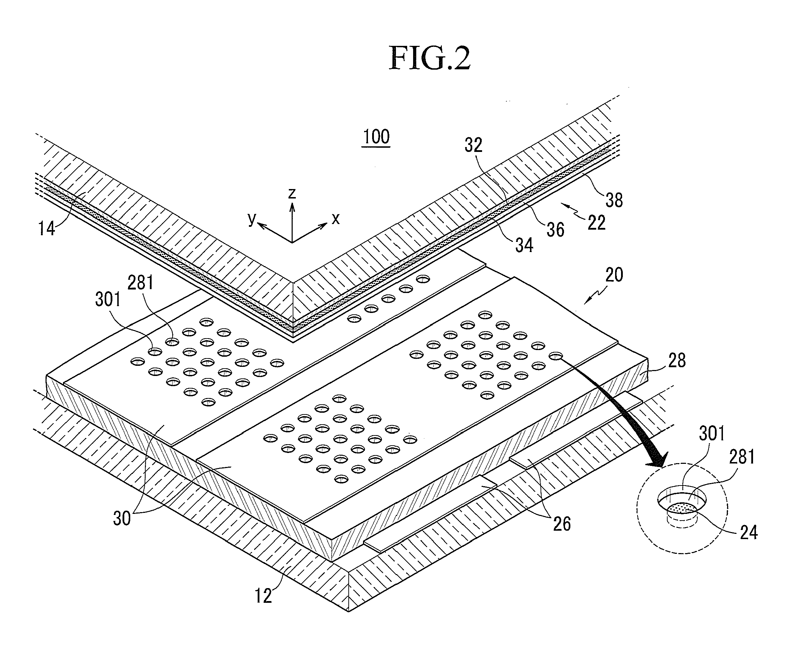

Hereinafter, an embodiment of a light emission device 100 having a reflective layer 36 and 38 with a first reflective layer 36 and a second reflective 38 is illustrated with reference to FIG. 1 and FIG. 2. However, FIG. 1 and FIG. 2 illustrate only one embodiment of a light emission device having the reflective layer, and the present invention is not limited thereto. FIG. 1 is a partial cross-sectional view showing one embodiment of the present invention, and FIG. 2 is an exploded perspective schematic view showing the inside of an effective region of the light emission device shown in FIG. 1.

The light emission device 100 includes a first substrate 12 and a second substrate 14 arranged to face each other with a vacuum region (or a predetermined distance) therebetween. At the edge portion (or the edge) of the first substrate 12 and the second substrate 14, a sealing member 16 is disposed to join the substrates 12 and 14 together. The vacuum region is evacuated to a degree of vacuum of about 10⁻⁶ Torr, so a vacuum panel 18, including the first substrate 12, the second substrate 14, and the sealing member 16, is provided.

A region defined by the first substrate 12, the second substrate 14, and the sealing member 16 can be partitioned into an effective region that contributes to emission of visible light and a non-effective region surrounding the effective region. An electron emitting unit 20 for emitting electrons is in the effective region defined by the first substrate 12, and a light emitting unit 22 for emitting visible light is in the effective region defined by the second substrate 14.

The electron emission unit 20 includes an electron emission region 24 and driving electrodes for controlling the amount of emission current of the electron emission region 24. The driving electrodes include cathode electrodes 26 forming a stripe pattern along a first direction (e.g., the y axis direction in FIGs. 1 and 2) of the first substrate 12 and gate electrodes 30 forming a stripe pattern along a second direction (e.g., the x axis direction in FIGs. 1 and 2) crossing the first direction of the cathode electrodes 26 on an upper portion of the cathode electrodes 26 with an insulation layer 28 therebetween.

The gate electrodes 30 and the insulation layer 28 have openings 301 and 281 at every crossing region of the cathode and gate electrodes 26 and 30 to expose a part of the surfaces of the cathode electrodes 26. The electron emission region 24 is formed on the cathode electrode 26 inside the opening 281 of the insulation layer. The electron emission region 24 may include any suitable material selected from the group consisting of materials that emit electrons by applying an electric field under vacuum, for example carbon nanotubes, graphite, graphite nanofiber, diamond-shaped carbon, fullerene, silicon nano-wire, and combinations thereof.

One crossing region overlapping the cathode electrode 26 and the gate electrode 30 may correspond to one pixel area of the light emission device 100, or two or more crossing regions may correspond to one pixel area of the light emission device 100. The light emitting unit 22 includes an anode electrode 32, a phosphor layer 34 disposed on one surface of the anode electrode 32, and a reflective layer 36 and 38 covering the phosphor layer 34. The anode electrode 32 is formed with a transparent conductive material, such as indium tin oxide (ITO), to maintain the phosphor layer 34 in a high potential state when it is applied with a high voltage (anode voltage) of 5kV or more, and to transmit the visible light emitted from the phosphor layer 34.

The reflective layer 36 and 38 reflects the visible light emitted to the first substrate 12, toward the second substrate 14 side, so as to increase the luminance of the light emission surface. On the other hand, the anode electrode 32 may be omitted, and the reflective layer 36 and/or 38 is then applied with the anode voltage to play the role of an anode electrode.

The phosphor layer 34 may be composed of white phosphor, which is a mix of red phosphor, green phosphor, and blue phosphor.

As shown in FIGs. 1 and 2, the reflecting layer according to one embodiment of the present invention includes a first reflective layer 36 between the phosphor layer 34 and a second reflective layer 38.

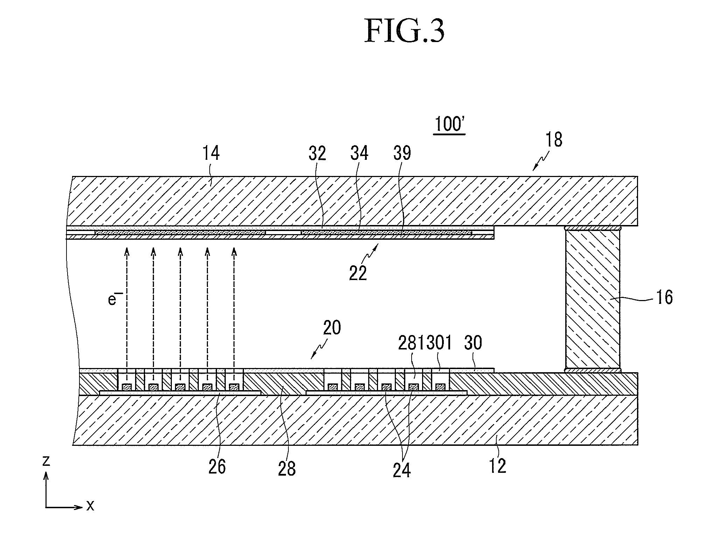

Also, as shown in FIG. 3, during the formation of a light emission device 100' according to another embodiment of the present invention, an intermediate film 39 may be formed to cover the phosphor layer 34 between the phosphor layer 34 and the reflective layer 36 and 38. The intermediate film 39 secures a reflective space for reflecting visible light between the phosphor layer 34 and the reflective layer 36 and 38 to improve reflectivity. The intermediate film 39 is then removed during a baking process to provide the reflective space.

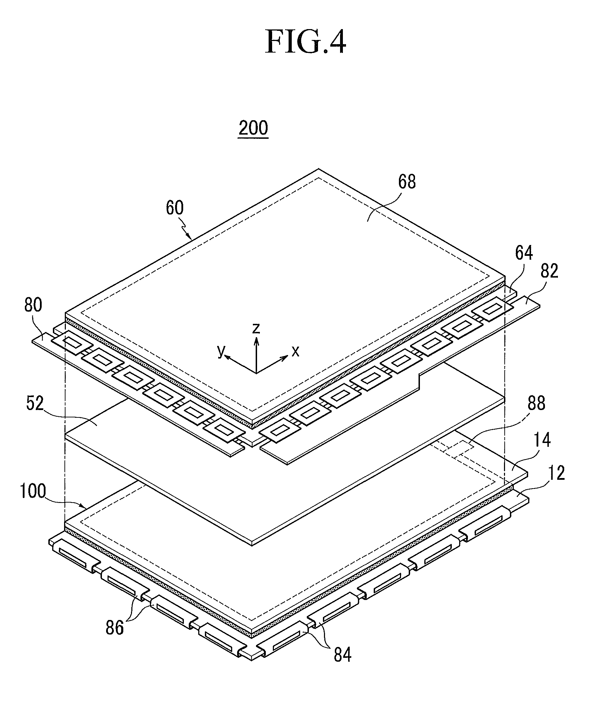

FIG. 4 shows a display device 200 according to yet another embodiment of the present invention using the light emission device 100 as a light source.

As shown in FIG. 4, the display device 200 includes the light emission device 100 and a display panel 60 disposed in front of the light emission device 100. A diffuser 52 is disposed between the light emission device 100 and the display panel 60. The display panel 60 includes a liquid crystal panel or other suitable non-self-emission display panel. Hereinafter, the case of the display panel 60 being a liquid crystal panel is described in more detail.

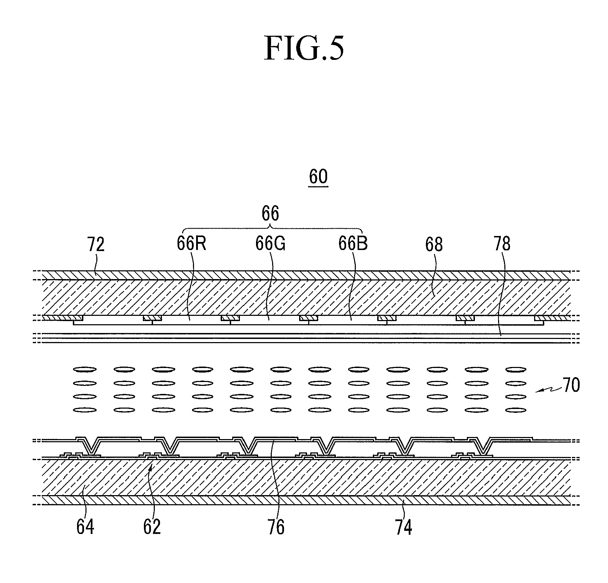

FIG. 5 is a partial cross-sectional view of the display panel shown in FIG. 4. Referring to FIG. 5, the display panel 60 includes a lower substrate 64 formed with a plurality of thin film transistors (TFTs) 62, an upper substrate 68 formed with a color filter layer 66, and a liquid crystal layer 70 implanted between the substrates 64 and 68. Polarizers 72 and 74 are respectively attached on the upper surface of the upper substrate 68 and the lower surface of the lower substrate 64, to polarize light transmitted through the display panel 60.

Transparent pixel electrodes 76, each of which is driven and/or controlled by the TFT 62 per subpixel, are disposed on the surface of the lower substrate 64 facing the upper substrate 68, and transparent common electrodes 78 are disposed on the surface of the upper substrate 68 facing the lower substrate 64. The color filter layer 66 includes a red filter layer 66R, a green filter layer 66G, and a blue filter layer 66B, each of which is disposed for a subpixel.

When the TFT 62 of a certain subpixel turns on, an electric field is formed between the pixel electrode 76 and the common electrode 78. The electric field changes the alignment angle of liquid crystal molecules, thereby changing the light transmission. The display panel 60 controls the luminance and the light emitting color per pixel through such process.

Reference number 80 in FIG. 4 represents a gate printed circuit board assembly (PBA) for transmitting the gate driving signal to each TFT gate electrode, and reference number 82 represents a data printed circuit board assembly (PBA) for transmitting the data driving signal to each TFT source electrode.

Referring to FIG. 4, the light emission device 100 has pixels of a lesser number than that of the display panel 60 to allow one pixel of the light emission device 100 to correspond to two or more pixels of the display panel 60. Each pixel of the light emission device 100 can emit light by responding to the highest gray level among gray levels of a plurality of corresponding pixels of the display panel 60, and can express gray levels in grayscales of 2 to 8 bits.

For convenience, pixels of the display panel 60 are defined as first pixels and pixels of the light emission device 100 are defined as second pixels. The first pixels corresponding to one second pixel are called a first pixel group.

The light emission device 100 may be driven by a process including: ① detecting the highest gray level among gray levels of the first pixels for forming the first pixel group with a signal control part for controlling the display panel 60; ② determining and/or calculating the gray level required to emit light in the second pixel depending upon the detected highest gray level to convert it to digital data; ③ producing a driving signal of the light emission device 100 by using the digital data; and ④ applying the produced driving signal to the driving electrode of the light emission device 100.

In one embodiment, the driving signal of the light emission device 100 includes a scan driving signal and a data driving signal. In one embodiment, the driving electrode includes the cathode electrode 26 and the gate electrode 30 as described above. In one embodiment, for example, the gate electrode 30 is applied with the scan driving signal, and the cathode electrode 26 is applied with the data driving signal.

A scan printed circuit board assembly (PBA) and a data printed circuit board assembly (PBA) for driving the light emission device 100 can be disposed at the rear surface of the light emission device 100. According to an embodiment of the present invention, reference number 84 in FIG. 4 represents a first connecting member connecting the cathode electrode 26 to the data printed circuit board assembly (PBA), and reference number 86 represents a second connecting member connecting the gate electrode 30 to the scan printed circuit board assembly (PBA). Reference number 88 represents a third connecting member for applying an anode voltage to the anode electrode 32.

As mentioned above, when the image is expressed in the first pixel group corresponding to the second pixel of the light emission device 100, it is synchronized with the first pixel group to emit light of a set (or predetermined) gray level. In other words, the light emission device 100 provides high luminous light to a bright region in the screen expressed by the display panel 60, but it provides low luminous light to a dark region. Accordingly, the display device 200 according to the embodiment of FIGs. 4 and 5 can increase its contrast ratio and improve its clearer image quality.

The following examples illustrate the present invention in more detail. However, the present invention is not limited by these examples.

### Comparative Example 1

A reflective layer was prepared by plating Cr on a glass substrate.

### Comparative Example 2

A reflective layer was prepared by sputtering Al on a glass substrate.

### Comparative Example 3

A reflective layer is prepared by depositing Ag on a glass substrate.

### Example 1

A composition was prepared by mixing AgNO₃, a dispersing agent of ethylenediamine tetraacetic acid, and a reducing agent of hydrazine in a ratio of 20:10:20wt% in a Na₄OH solvent. The composition was spray-coated on a glass substrate and dried at 400°C to provide a reflective layer.

### Comparative Example 4

A reflective layer was prepared with stainless steel on a glass substrate in accordance with the Super Mirror method.

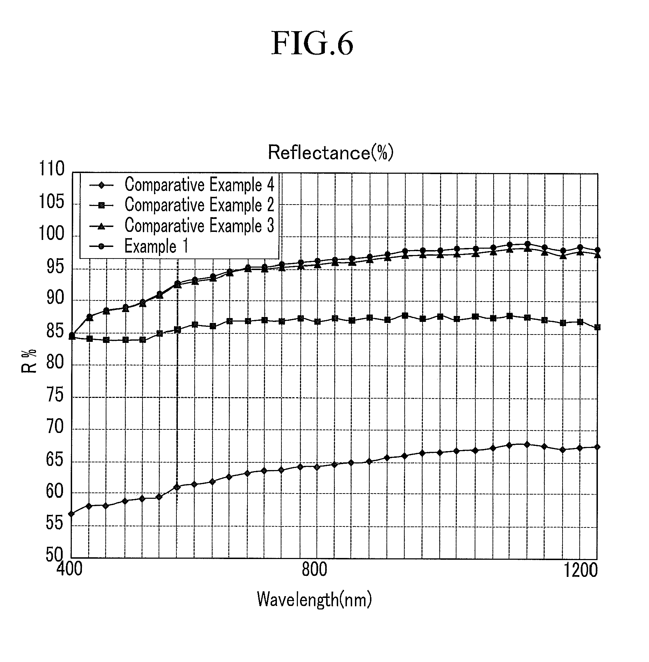

The reflective layers obtained from Example 1 and Comparative Examples 1 to 4 were measured to determine reflectance, and the results are shown in FIG. 6 for Example 1 and Comparative Examples 2 to 4. Table 1 shows the results of reflective layers obtained from Example 1 and Comparative Examples 1 to 2 that were measured at a wavelength of about 1000nm.

**Table 1**

| | Comparative Example 1 (Cr plating) | Comparative Example 2 (Al sputtering) | Example 1 (Ag spray coating) |
|---|---|---|---|
| Reflectance (%) | 65 | 87.5 | 98.52 |

As shown in Table 1 and FIG. 6, Example 1 in which Ag was spray-coated had the best reflectivity result. As shown in FIG. 6, Comparative Example 3 in which Ag was deposited showed lower reflectivity than that of Example 1. In addition, such deposit process had difficult problems in that additional facilities were required, and particularly, it was hard to produce a thick layer such as a reflective layer. As such, it can be derived that the Ag spray-coating process could provide improved reflectivity to that of a reflective layer obtained from the Ag deposition process.

It is understood that the reflectivity of Comparative Example 2 in which the reflective layer was formed by the Al deposition process and the reflectivity of Comparative Example 4 in which the reflective layer was formed with the stainless steel in accordance with the Super Mirror method were substantially less than that of Example 1.

### Example 2

A 100nm (1000Å) thick Al first reflective layer was prepared by depositing Al on one surface of an intermediate film formed on a white phosphor layer having a structure shown in FIG. 3. A composition prepared by mixing AgNO₃, a dispersing agent of ethylenediamine tetraacetic acid, and a reducing agent of hydrazine in a ratio of 20:10:20wt% in a Na₄OH solvent was spray-coated on the Al first reflective layer, and dried at 400°C to provide an Ag second reflective layer. The second reflective layer had a thickness of 200nm (2000Å).

### Comparative Example 5

A reflective layer was prepared in accordance with the same procedure as in Example 2, except that the Ag second reflective layer was prepared by the deposition process.

The reflective layers obtained from Example 2 and Comparative Example 5 were measured to determine cathode luminescence (CL) efficiency, and the results are shown in the following Table 2.

**Table 2**

| | CL efficiency |
|---|---|
| Comparative Example 5 | 191m/W |
| Example 2 | 231m/W |

As shown in Table 2, the CL efficiency of the spray coated Ag reflective layer is better than the CL efficiency of the Ag reflective layer that was prepared by the deposition process.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A light emission device comprising:
a first substrate and a second substrate facing each other with a vacuum region therebetween;
an electron emission region at a surface of the first substrate facing the second substrate;
a phosphor layer on a side of the second substrate that faces the first substrate; and
a reflective layer covering the phosphor layer,
wherein the reflective layer comprises a first reflective layer comprising Al and a second reflective layer comprising Ag.

2. The light emission device of claim 1, further comprising:
a driving electrode at the surface of the first substrate for controlling electron emission from the electron emission region;
an anode electrode at a surface of the second substrate facing the first substrate, wherein the phosphor layer is on the anode electrode.

3. The light emission device of claim 1, wherein one or both of the first and second reflective layers are connected to an anode voltage source to act as an anode electrode.

4. The light emission device of claim 1, 2 or 3, wherein the first reflective layer covers the phosphor layer, and the second reflective layer covers the first reflective layer, or wherein the second reflective layer covers the phosphor layer, and the first reflective layer covers the second reflective layer.

5. The light emission device of any one of the preceding claims, further comprising a reflective space between the phosphor layer and the reflective layer.

6. The light emission device of any one of the preceding claims, wherein the second reflective layer is a spray-coating.

7. The light emission device of claim 6, wherein the spray-coating is formed with a dispersing agent, and wherein the dispersing agent is a quadribasic acid.

8. The light emission device of claim 6, wherein the spray-coating is formed with an additive and a metal, and wherein the additive and the metal are mixed in a weight ratio between about 0.25:1 and about 2:1.

9. The light emission device of claim 6, wherein the spray-coating is formed with a metal composition comprising an Ag salt, an additive, and a solvent on one surface of the phosphor layer or one surface of the first reflective layer.

10. The light emission device of claim 9, wherein the Ag salt is selected from the group consisting of Ag-nitrates, Ag-chlorides, Ag-acetates, and combinations thereof.

11. The light emission device of any one of the preceding claims, wherein the first reflective layer and/or the second reflective layer has a thickness between about 20 nm and about 300 nm.

12. The light emission device of any one of the preceding claims, wherein the phosphor layer is a white phosphor, and wherein the white phosphor is a mixture of a red phosphor, a green phosphor, and a blue phosphor.

13. The light emission device of claim 12, wherein the red phosphor is selected from the group consisting of Y₂O₃:Eu, Y₂O₂S:Eu, SrTiO₃:Pr, and combinations thereof; the green phosphor is selected from the group consisting of Y₂SiO₅:Tb, Gd₂O2_{S}:Tb, ZnS:(Cu,Al), ZnSiO₄:Mn, Zn(Ga,Al)₂O₄:Mn, SrGa₂S₄:Eu, and combinations thereof; and the blue phosphor is selected from the group consisting of ZnS:(Ag,Al), Y₂SiO₅:Ce, BaMgAl₁₀O₁₇:Eu, and combinations thereof.

14. The light emission device of claim 12 or 13, wherein the red phosphor, the green phosphor, and the blue phosphor are mixed at a weight ratio between about 15:30:24 and about 30:60:45.

15. The light emission device of any one of the preceding claims when dependent on claim 2, wherein the driving electrode comprises a cathode electrode and a gate electrode crossing each other with an insulation layer therebetween, and a crossing region overlapped by the cathode electrode and the gate electrode corresponds in position to a pixel area of the light emission device.
